# EUROPEAN PATENT SPECIFICATION

(11) **EP 4 392 476 B1**
(45) Date of publication and mention of the grant of the patent: **20.08.2025**
(21) Application number: 22768701.9
(22) Date of filing: 22.08.2022
(51) Int. Cl.: C08G 63/60, C08G 63/80, C08G 63/91, C08G 81/00, C08L 67/00

(54) **TOUGHENED BRANCHED POLY(HYDROXYACID) COMPOSITION**
GEHÄRTETE VERZWEIGTE POLY(HYDROXYSÄURE)-ZUSAMMENSETZUNG
COMPOSITION DE POLY(HYDROXYACIDE) RAMIFIÉ RENFORCÉ

(30) Priority: 25.08.2021 US 202163236825 P
(43) Date of publication of application: 03.07.2024
(73) Proprietor: Solvay Specialty Polymers USA, LLC, Alpharetta, Georgia 30005-3914 (US)
(72) Inventor: POWELL, Chad, Alpharetta, Georgia 30009 (US); ANIM-DANSO, Emmanuel, Sandy Springs, Georgia 30350 (US); BENSON, Bryan, Ball Ground, Georgia 30107 (US); BRANHAM, Kelly D., Woodstock, Georgia 30188 (US)
(74) Representative: Ferri, Isabella
(86) International application number: PCT/EP2022/073316
(87) International publication number: WO 2023/025718

(56) References cited:
- US-A1- 2016 290 083
- US-A1- 2018 171 072

## Description

### Cross-Reference to Related Applications

This application claims priority to U.S provisional application US 63/236825 filed on August 25, 2021.

### Technical Field

The present invention relates to a poly(hydroxyacid) (PHA) composition, specifically poly(glycolic acid) (PGA), endowed with a high elastic modulus and high ductility.

### Background Art

Poly(glycolic acid) (PGA) is a polymer of high interest for multiple applications in consumer, oil and gas, and biomedical applications due to its excellent mechanical and barrier properties combined with biodegradability.

In oil and gas applications, PGA is typically employed as downhole tool or downhole tool member during drilling and fracking operations. The strength and degradability allow the material to perform temporary roles in the process and degrade away without the need for drill-out.

One of the main drawbacks of PGA is however its low ductility, thus limiting its potential use in these demanding applications.

EP3088657A1 (Kureha Corp.) discloses downhole tools or a downhole tool member having sufficient mechanical strength under severe conditions as well as a high degree of shock resistance, said downhole tools or downhole tool member being made of a composition comprising a degradable resin, preferably selected from the group consisting of PGA, PLA, and a glycolic acid-lactic acid copolymer (PGLA), and a toughness enhancing agent. The composition may further comprise a chain extender, in such a case the composition contains 60 - 98.8 mass% of the degradable resin, 1 - 37 mass% of the toughness enhancing agent, and 0.2 - 3 mass% of the chain extender the total of the degradable resin, the toughness enhancing agent and the chain extender being 100 mass%. The chain extender may be an oxazoline compound, an isocyanate compound, a carbodiimide compound, a carbodiimide-modified isocyanate compound, a fatty acid bisamide compound, an alkyl substituted fatty acid monoamide compound, a 1-3 functional glycidyl-modified compound having a triazine backbone, an epoxy compound, an acid anhydride, an oxazine compound, a ketene compound, and the like; an oxazoline compound and an isocyanate compound are preferable. EP3088657A1 does not disclose compositions comprising branched PGA or branched PGA copolymers.

WO2020087205A1 (Pujing Chemical Ind Co Ltd) is directed to a polyglycolide copolymer including a block of PGA having a length of 1 to 1500 units and a block of an aliphatic and/or aromatic polymer, which are bound together through covalent bonds of different nature. The said copolymer may be prepared by ring-open polymerizing a glycolide and extruding/granulating the same with an additive having isocyanate, acid chloride, oxazolyl, oxazoline, anhydride, epoxy group or amine group. The structure of the polyglycolide blocks is believed to be linear. US2018/171072A1 discloses a method for synthesizing a branched poly(hydroxyl acid).

It has now been found that the ductility as well as the tensile elongation at break of certain branched poly(hydroxyacid acid) polymers can be successfully enhanced while maintaining the high tensile and flexural moduli of the unmodified resin by the incorporation of low amounts of selected chain extending agents. The resulting compositions possess a good balance of mechanical as well as solubility properties which render them advantageous over the linear chain extended polymers of the prior art.

### Summary of invention

An object of the invention is a composition comprising: a branched poly(hydroxyacid) polymer, hereinafter [polymer (HAP)], and from 0.01 to less than 1.00 wt% of a chain extending agent comprising epoxy functional groups and having a number average functionality ≥ 2, [agent (CE)].

The branched poly(hydroxyacid) polymer is obtained from the polycondensation reaction of a monomer mixture comprising:
(i) at least one hydroxyacid having only one hydroxyl group and only one carboxylic acid group [hydroxyacid (A)];
(ii) optionally at least one carboxylic acid having one or two carboxylic acid groups and being free from hydroxyl group [acid (C)], and
(iii) at least one polyfunctional reactant different from hydroxyacid (A) and acid (C), [reactant (F)], selected from the group consisting of :
   - compounds containing at least one epoxy functional group, preferably compounds selected from the group consisting of epoxysilanes and polyepoxides;
   - mixtures comprising at least one polyol comprising at least three hydroxyl groups and being free from carboxylic acid group [polyol (H)] and at least one polyacid comprising at least two carboxylic acid groups and being free from hydroxyl groups [polyacid (O)]; and
   - mixtures comprising at least one polyol comprising at least three hydroxyl groups and being free from carboxylic acid group [polyol (H)] and at least one alcohol comprising one or two hydroxyl groups and being free from carboxylic acid group [alcohol (AO)].

A further object of the invention is a chain extended polymer, [polymer (CEHAP)], comprising a backbone of a branched poly(hydroxyacid) polymer, polymer (HAP), covalently bonded to units deriving from chain extending agent, agent (CE). The amount of units deriving from agent (CE) is from 0.01 to less than 1.00 wt% based on the total weight of polymer (CEHAP).

Chain extended polymer (CEHAP) is typically obtained by the reaction of polymer (HAP) and agent (CE). The reaction is typically performed in the melt phase of polymer (HAP). Typically the reaction is performed in an extruder.

The chain extended polymer (CEHAP) may be molded into articles, such as a bottle, an article for hydrocarbon resource recovery, such as downhole tools or downhole tool members, a film for packaging, a feminine hygiene product, a disposable pod, a structural component for electronic applications or a biomedical article.

### Disclosure of invention

For the purposes of the present description:
- the use of parentheses before and after symbols or numbers identifying compounds, chemical formulae or parts of formulae has the mere purpose of better distinguishing those symbols or numbers from the rest of the text and hence said parentheses can also be omitted;
- when numerical ranges are indicated range ends are included.

### The branched poly(hydroxyacid) polymer, polymer (HAP)

### The hydroxyacid (A)

Any hydroxyacid capable of polycondensing, i.e. of forming a macromolecule by condensation, that is chain addition of monomers with removal of water, can be used as hydroxyacid (A). Examples include glycolic acid, lactic acid, 3-hydroxybutyric acid, 4-hydroxybutyric acid, 4-hydroxyvaleric acid, 5-hydroxyvaleric acid, 6-hydroxycaproic acid. In general, hydroxyacids that have a primary alcohol are preferred as they are more reactive.

Preferably, hydroxyacid (A) is selected from the group consisting of glycolic acid, lactic acid (L- or D- isomers, either in racemic mixture or as single isomer), and mixtures thereof. Glycolic acid is particularly preferred.

Hydroxyacid (A) may consist of glycolic acid. Alternatively, hydroxyacid (A) may comprise glycolic acid and at least one hydroxyacid (A) different from glycolic acid. In said alternative variant, glycolic acid is preferably at least 50 % moles, preferably at least 70% moles, even at least 95 % moles of the total amount of hydroxyacid (A). When present, the amount of hydroxyacid (A) different from glycolic acid is of at most 5 % moles, generally of at most 4 % moles, preferably at most 3 % moles; and/or said amount can be as low as 0.1 % moles, with respect to the sum of moles of glycolic acid and hydroxyacid (A).

### Acid (C)

Acid (C) is selected among carboxylic acids having one or two carboxylic groups and being free from hydroxyl groups. It is generally understood that better results are obtained with acids (C) wherein the total number of carbon atoms is at least 4, preferably at least 5 more preferably at least 6. Generally acid (C) possesses from 4 to 36 carbon atoms, preferably from 6 to 24 carbon atoms.

Among carboxylic acids having one carboxylic acid group which can be advantageously used as acid (C), mention can be notably made of aliphatic acids such as caprylic acid [CH₃(CH₂)₆-COOH], capric acid [CH₃(CH₂)₈-COOH], undecanoic acid [CH₃(CH₂)₉-COOH], dodecanoic or lauric acid [CH₃(CH₂)₁₀-COOH], tridecanoic acid [CH₃(CH₂)₁₁-COOH], tetradecanoic or myristic acid [CH₃(CH₂)₁₂-COOH], pentadecanoic acid [CH₃(CH₂)₁₃-COOH], hexadecanoic or palmitic acid [CH₃(CH₂)₁₄-COOH], octadecanoic or stearic acid [CH₃(CH₂)₁₆-COOH], arachidic acid [CH₃(CH₂)₁₈-COOH], behenic acid [CH₃(CH₂)₂₀-COOH]. An aliphatic acid (C) which has been shown to provide particularly good results is stearic acid, which is hence particularly preferred.

When acid (C) is an aromatic monocarboxylic acid, it is advantageously selected from the group consisting of benzoic acid, naphthoic acid and phenylacetic acid.

Among dicarboxylic acids which can be advantageously used as acid (C), mention can be made of succinic acid [HOOC-(CH₂)₂-COOH], glutaric acid [HOOC-(CH₂)₃-COOH], 2,2-dimethyl-glutaric acid [HOOC-C(CH₃)₂-(CH₂)₂-COOH], adipic acid [HOOC-(CH₂)₄-COOH], 2,4,4-trimethyl-adipic acid [HOOC-CH(CH₃)-CH₂-C(CH₃)₂-CH₂-COOH], pimelic acid [HOOC-(CH₂)₅₋COOH], suberic acid [HOOC-(CH₂)₆-COOH], azelaic acid [HOOC-(CH₂)₇-COOH], sebacic acid [HOOC-(CH₂)₈-COOH], undecanedioic acid [HOOC-(CH₂)₉-COOH], dodecanedioic acid [HOOC-(CH₂)₁₀-COOH], tetradecanedioic acid [HOOC-(CH₂)₁₁-COOH], octadecanedioic acid [HOOC-(CH₂)₁₆-COOH].

### The polyfunctional reactant (F)

### The compounds containing at least one epoxy functional group

Notable non-limiting examples of suitable compounds containing at least one expoxy functional group are selected from the group consisting of epoxysilanes, in particular, glycidyloxypropyltrimethoxysilane or polyepoxides. Among polyepoxides mention may be made of bisphenol A diglycidyl ether (BADGE) or epoxidized oils such as epoxidized soybean oil or epoxidized linseed oil.

### Mixtures comprising at least one polyol (H) and at least one polyacid (O)

### The polyol (H)

The choice of polyol (H) is not particularly limited : any polyol comprising at least three hydroxyl groups and being free from carboxylic acid group may be used in the preparation of the branched poly(hydroxyacid).

Polyol (H) can be selected from the group consisting of:
- triols, in particularly selected from the group consisting of glycerol, trimethylolpropane, trimethylolbutane, 2,3-di(2'-hydroxyethyl)-cyclohexan-1-ol, hexane-1,2,6-triol, 1,1,1-tris(hydroxymethyl)ethane, 3-(2'-hydroxyethoxy)propane-1,2-diol, 3-(2'-hydroxypropoxy)-propane-1,2-diol, 2-(2'-hydroxyethoxy)-hexane-1,2-diol, 6-(2'hydroxypropoxy)-hexane-1,2-diol, 1,1,1-tris-[(2'-hydroxyethoxy)-methylethane, 1,1,1-tris-[(2'-hydroxypropoxy)-methyl-propane, 1,1,1-tris-(4'-hydroxyphenyl)ethane, 1,1,1-tris-(hydroxyphenyl)-propane, 1,1,5-tris-(hydroxyphenyl)-3-methylpentane, trimethylolpropane ethoxylate, trimethylolpropane propoxylate, tris(hydroxymethyl)aminomethane;
- tetraols, in particularly selected from the group consisting of diglycerol, di(trimethylolpropane), pentaerythritol, 1,1,4-tris-(dihydroxyphenyl)-butane;
- polyols comprising 5 hydroxyl groups, in particular triglycerol;
- polyols comprising 6 hydroxyl groups, in particular dipentaerythritol; and
- polyols comprising 8 hydroxyl groups, in particular tripentaerythritol.

Preferred polyols (H) are triols and tetraols. A polyol (H) which has been found to provide particularly good results within the frame of the present invention is trimethylolpropane.

### The polyacid (O)

Polyacid (O) can be any polyacid comprising at least two carboxylic acid groups and being free from hydroxyl groups. Polyacid (O) is different from acid (C) when this is present.

Polyacid (O) comprises at least two carboxylic acid groups, in particular two, three or four carboxylic acid groups.

Polyacid (O) can be selected among polycarboxylic aliphatic acids, polycarboxylic cycloaliphatic acids and polycarboxylic aromatic acids.

Examples of polycarboxylic aliphatic acids are: propane1,2,3-tricarboxylic acid (also known as tricarballylic acid); ethane-1,1,2,2 tetracarboxylic acid; butane-1,2,3,4 tetracarboxylic acid; pentane-1,2,4,5-tetracarboxylic acid. Among them, butane-1,2,3,4 tetracarboxylic acid is preferred.

Examples of polycarboxylic cycloaliphatic acids are: 1,2,3,4-cyclobutane tetracarboxylic acid; 2,2,6,6-tetra-(carboxyethyl)cyclohexanone; (+)-(18-crown-6)-2,3,11,12-tetracarboxylic acid; cyclopentane-1,2,3,4 tetracarboxylic acid; cyclohexane-1,2,4,5 tetracarboxylic acid; cyclohexane -2,3,5,6 tetracarboxylic acid; 3-ethylcyclohexane-1,2,4,5 tetracarboxylic acid; 1-methyl-3-ethyl cyclohexane-3-(1,2)5,6 tetracarboxylic acid; 1-ethyl cyclohexane-1-(1,2),3,4 tetracarboxylic acid; 1-propylcyclohexane-1-(2,3),3,4 tetracarboxylic acid; 1,3-dipropylcyclohexane-1-(2,3),3-(2,3) tetracarboxylic acid; dicyclohexyl-3,4,3',4' tetracarboxylic acid.

Examples of polycarboxylic aromatic acids are: phthalic acids, including isophthalic acid and terephthalic acid, 2,5-pyridinedicarboxylic acid, 2,4 pyridinedicarboxylic acid, 3,5-pyridinedicarboxylic acid, 2,2 bis(4 carboxyphenyl)propane, bis(4-carboxyphenyl)methane, 2,2 bis(4 carboxyphenyl)hexafluoropropane, 2,2-bis(4-carboxyphenyl)ketone, 4,4' bis(4-carboxyphenyl)sulfone, 2,2-bis(3-carboxyphenyl)propane, bis(3 carboxyphenyl)methane, 2,2-bis(3-carboxyphenyl)hexafluoropropane, 2,2 bis(3-carboxyphenyl)ketone, bis(3-carboxyphenoxy)benzene, naphthalene dicarboxylic acids, including 2,6-naphthalene dicarboxylic acid, 2,7-naphthalene dicarboxylic acid,1,4-naphthalene dicarboxylic acid, 2,3-naphthalene dicarboxylic acid, 1,8-naphthalene dicarboxylic acid.

Among aromatic carboxylic acids having more than 2 carboxylic acid groups, mention may be made of : pyromellitic acid (1,2,4,5- benzene tetracarboxylic acid); trimesic acid (1,3,5-benzene tricarboxylic acid); trimellitic acid (1,3,4-benzene tricarboxylic acid); benzophenone-3,3',4,4'-tetracarboxylic acid; tetrahydrofuran-2,3,4,5-tetracarboxylic acid; 4,4'-(hexafluoroisopropylidene)diphthalic acid; 4,4'-oxydiphthalic acid anhydride; 4,4'-(4,4'-isopropylidenediphenoxy)bis(phthalic acid); 3,3',4,4'-biphenyl tetracarboxylic acid; 2,3,3',4'-biphenyl tetracarboxylic acid; 2,2' ,3,3'-biphenyl tetracarboxylic acid; 1,2,5,6-naphthalene tetracarboxylic acid; 2,3,6,7-naphthalene tetracarboxylic acid; perylene-3,4,9,10 tetracarboxylic acid; propane 2,2-bis(3,4-dicarboxyphenyl) acid; ethane 1,1-bis(2,3-dicarboxyphenyl) acid; ethane 1,1-bis(3,4-dicarboxyphenyl) acid; phenanthrene-1,8,9,10-tetracarboxylic acid; tetrahydrofuran-2,3,4,5-tetracarboxylic acid; 3,3',4,4'-benzophenone tetracarboxylic acid; 2,2',3,3'-benzophenone tetracarboxylic acid; 2,3,5,6-pyridine tetracarboxylic acid; 3,3',4,4'-tetraphenylsilane tetracarboxylic acid; 2,2'-bis-(3,4-bicarboxyphenyl) hexafluoropropane tetracarboxylic acid; 2,2-bis(3,4-dicarboxyphenyl) sulfonic acid; 4,4'-(hexafluoroisopropylidene) diphthalic acid; 3,3',4,4'-diphenylsulfone tetracarboxylic acid; ethyleneglycol bistrimellitic acid; hydroquinone diphthalic acid; pyrazine-2,3,5,6-tetracarboxylic acid; thiophene-2,3,4,5-tetracarboxylic acid.

Polyacids (O) which have been found to provide particularly good results within the frame of the present invention are phthalic acids, in particular isophthalic acid, tricarballylic acid, 1,2,4,5- benzene tetracarboxylic acid and butane-1,2,3,4 tetracarboxylic acid. Tricarballylic acid and isophthalic acid are particularly preferred.

### Mixtures comprising at least one polyol (H) and at least one alcohol (AO)

Polyol (H) is as detailed above.

### The alcohol (AO)

Alcohol (AO) can be a monoalcohol (MO) comprising one hydroxyl group, a diol (D) comprising two hydroxyl groups or a mixture of a monoalcohol (MO) and of a diol (D).

When alcohol (AO) is a monoalcohol (MO), it can be selected from aliphatic or aromatic monoalcohols.

Monoalcohol (MO) is characterized by a boiling point at atmospheric pressure, advantageously of at least 90°C, preferably of at least 100°C, more preferably of at least 125°C and most preferably of at least 150°C.

Aliphatic monoalcohol (MO) is advantageously an aliphatic monoalcohol of formula below:

R_{Hm}-OH

wherein R_{Hm} is a monovalent aliphatic group having one or more than one carbon atom, in particular having 3 or more carbon atoms.

It is generally understood that better results are obtained with long chain aliphatic monoalcohols, i.e. aliphatic monoalcohols (MO) wherein the total number of carbon atoms is advantageously at least 6. The aliphatic monoalcohol (MO) possesses preferably from 6 to 36 carbon atoms and more preferably from 6 to 24 carbon atoms.

Among aliphatic monoalcohol (MO) which can be advantageously used in the present invention, mention can be notably made of 1-hexanol [CH₃(CH₂)₅-OH], 1-dodecanol [CH₃(CH₂)₁₁-OH], 1-hexadecanol or cetyl alcohol [CH₃(CH₂)₁₅-OH], 1-octadecanol or stearyl alcohol CH₃(CH₂)₁₇-OH], arachidic alcohol CH₃(CH₂)₁₈-OH], 1-docosanol or behenic alocohol [CH₃(CH₂)₂₁-OH], cyclohexanol and menthol.

When monoalcohol (MO) is an aromatic monoalcohol it is advantageously selected from the group consisting of phenol, cresol, naphthol, benzyl alcohol, 2-phenyl ethanol and 3-phenyl propanol.

Monoalcohol (MO) is preferably selected from the group consisting of dodecanol, benzyl alcohol, menthol and mixtures thereof.

When the alcohol (AO) is a diol (D), diol (D) is characterized by a boiling point at atomospheric pressure, advantageously of at least 100°C, preferably of at least 150°C, more preferably of at least 200°C and most preferably of at least 230°C.

Non limiting examples of suitable diols (D) are notably ethylene glycol, 2,2-dimethylpropane-1,3-diol, pentane-1,2-diol, pentane-1,5-diol, hexane-1,2-diol, heptane-1,2-diol, diethylene glycol, hexane-1,6-diol, heptane-1,7-diol, 1,4-cyclohexanediol, cis 1,2-cyclohexanediol, trans 1,2-cyclohexanediol, polyetherpolyol diols Dianol^{®} 220, 1,4-cyclohexane dimethanol, isosorbide, isoidide, dodecane 1,12-diol and mixtures thereof.

Diol (D) is preferably selected from the group consisting of diethyleneglycol, 1,4-cyclohexane dimethanol, isosorbide, isoidide, dodecane 1,12-diol and mixtures thereof.

The diol (D) is more preferably selected from the group consisting of diethyleneglycol, 1,4-cyclohexane dimethanol and mixtures thereof.

Diol (D) which has been shown to provide particularly good results is 1,4-cyclohexane dimethanol which is hence most particularly preferred, with a very particular preference to cis/trans isomer mixture of 1,4-cyclohexane dimethanol (CAS number 105-08-8).

Alcohol (AO) is preferably selected from the group consisting of diethyleneglycol, 1,4-cyclohexane dimethanol, isosorbide, isoidide, dodecane 1,12-diol, dodecanol, benzyl alcohol, menthol and mixtures thereof.

The branched poly(hydroxyacid) polymer used in the composition of the invention is obtained from the polycondensation reaction of a monomer mixture comprising:
(i) at least one hydroxyacid having only one hydroxyl group and only one carboxylic acid group [hydroxyacid (A)];
(ii) optionally at least one carboxylic acid having one or two carboxylic acid groups and being free from hydroxyl group [acid (C)], and
(iii) at least one polyfunctional reactant [reactant (F)] as detailed above.

The expression "branched polymer" is used herein with the meaning provided by IUPAC, that is to identify a polymer whose molecules are branched chains. In the present context, branching is introduced in the polymer chain by the presence of at least one polyfunctional reactant, reactant (F).

In a first embodiment of the invention, the branched poly(hydroxyacid) polymer may be selected among those polymers comprising recurring units deriving from the polycondensation reaction of a monomer mixture comprising at least one hydroxyacid (A) and at least one reactant (F) selected from the group consisting of compounds containing at least one epoxy functional group, preferably compounds selected from the group consisting of epoxysilanes and polyepoxides.

Polymers of the first embodiment are for instance those described in WO2010/112602A1 and can be prepared according to the processes described therein.

In a second embodiment of the invention, the branched poly(hydroxyacid) polymer is selected among those polymers comprising recurring units deriving from the polycondensation reaction of a monomer mixture comprising at least one hydroxyacid (A) and least one reactant (F) selected from mixtures comprising at least one polyol (H) having at least three hydroxyl groups and at least one polyacid (O) having at least three carboxylic acid groups.

In this second embodiment, hydroxyacid (A) is preferably selected from glycolic acid, lactic acid and their mixtures. More preferably, hydroxyacid (A) is glycolic acid.

Advantageously, the mixture comprising at least one polyol (H) and at least one polyacid (O) is selected from: a mixture of pentaerythritol and butanetetracarboxylic acid or a mixture of trimethylolpropane and tricarballylic acid.

Polymers of the second embodiment are for instance those described in WO2010/112602A1 and can be prepared according to the processes described therein.

In a third embodiment of the invention, the branched poly(hydroxyacid) polymer may be selected among those polymers obtained from the polycondensation reaction of a monomer mixture comprising at least one hydroxyacid (A), optionally at least one acid (C) and at least one reactant (F) selected from mixtures comprising at least one polyol (H) comprising at least three hydroxyl groups and at least one polyacid (O) comprising at least three carboxylic acid groups. In particular the branched poly(hydroxyacid) polymer may be selected among those polymers wherein the amount of acid (C) is such that the number of carboxylic acid groups thereof is comprised between 0.0001 to 0.010 % with respect to the number of hydroxyl groups of hydroxyacid (A).

Preferably hydroxyacid (A) is selected from glycolic acid, lactic acid and their mixtures. More preferably hydroxyacid (A) is glycolic acid.

Polyol (H) is typically selected among triols (in particular trimethylolpropane) and tetraols (in particular pentaerythritol). A polyol (H) which has been found to provide particularly good results is trimethylolpropane.

Polyacids (O) which have been found to provide particularly good results are tricarballylic acid, 1,2,4,5- benzene tetracarboxylic acid and butane-1,2,3,4 tetracarboxylic acid, with tricarballylic acid being particularly preferred.

Generally, the amount of polyacid (O) and of polyol (H) in the branched poly(hydroxyacid) polymer of the third embodiment, when expressed in moles per mole of hydroxyacid (A), are substantially similar. The molar ratio polyacid (O):polyol (H) is in the range 1.5:1 to 0.5:1; preferably in the range 1.25:1 to 0.75:1, more preferably in the range 1.10:1 to 0.9:1.

The amount of acid (C), when present, is such that the number of carboxylic acid groups thereof is comprised between 0.0001 to 0.010 % with respect to the number of hydroxyl groups of hydroxyacid (A). Preferably, said amount is such that the number of carboxylic acid group of said acid (C) is of at least 0.0005 %, preferably at least 0.001 % with respect to the number of hydroxyl groups of hydroxyacid (A) and/or at most 0.010 %, preferably at most 0.008 %, most preferably at most 0.007 %, even more preferably at most 0.006 % with respect to the number of hydroxyl groups of hydroxyacid (A).

Acid (C) is preferably a monocarboxylic acid. Stearic acid is particularly preferred.

Polymers of the third embodiment are for instance those described in WO2016173640A1 and can be prepared according to the processes described therein.

In a fourth embodiment of the invention, the branched poly(hydroxyacid) polymer may be selected among those polymers obtained from the polycondensation reaction of a monomer mixture comprising glycolic acid; optionally, at least one hydroxyacid (A) different from glycolic acid, in an amount of at most 5 % moles, with respect to the sum of moles of glycolic acid and hydroxyacid (A); optionally at least one acid (C) having one carboxylic acid group; and at least one reactant (F) selected from mixtures comprising at least one polyol (H) comprising at least three hydroxyl groups and at least one polyacid (O) selected from the aromatic acids comprising two aromatic carboxylic acid groups. In particular those polymers wherein: the amount of polyol (H) is such that the number of hydroxyl groups thereof is comprised between 0.050 to 1.200 % with respect to the overall number of carboxyl groups of glycolic acid and the hydroxyacid (A), if present; the amount of polyacid (O) is such that the number of carboxylic acid groups thereof is comprised between 0.050 to 0.750 % with respect to the overall number of hydroxyl groups of glycolic acid and of the hydroxyacid (A), if present; and the amount of acid (C), when present, is such that the number of carboxylic acid groups thereof is comprised between 0.0001 to 0.010 % with respect to the overall number of hydroxyl groups of glycolic acid and of the hydroxyacid (A), if present.

Polyol (H) is typically selected among triols (in particular trimethylolpropane) and tetraols (in particular pentaerythritol). Preferably, polyol (H) is trimethylolpropane.

Non limiting examples of suitable polyacids (O) comprising two aromatic carboxylic acid groups are phthalic acids, including isophthalic acid and terephthalic acid, 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene, naphthalene dicarboxylic acids, including 2,6-naphthalene dicarboxylic acid, 2,7-naphthalene dicarboxylic acid,1,4-naphthalene dicarboxylic acid, 2,3-naphthalene dicarboxylic acid, 1,8-naphthalene dicarboxylic acid. Phthalic acids are generally preferred. Isophthalic acid has shown to provide particularly good results.

Acid (C) is a monocarboxylic acid. Stearic acid is particularly preferred.

Polymers of the fourth embodiment are those described for instance in WO2018115008A1 and can be prepared according to the processes described therein.

In a fifth embodiment of the invention, the branched poly(hydroxyacid) polymer is selected among those polymers obtained from the polycondensation reaction of a monomer mixture comprising: glycolic acid; optionally, at least one hydroxyacid (A) different from glycolic acid, wherein the molar amount of hydroxyacid (A) is of at most 5 % moles with respect to the sum of moles of glycolic acid and hydroxyacid (A); optionally, at least one acid (C), said acid (C) having one carboxylic acid group; optionally at least one polyacid (O); and at least one reactant (F) selected from mixtures comprising at least one polyol (H) and at least one alcohol (AO).

Preferably, the branched poly(hydroxyacid) polymer is obtained from the polycondensation reaction of a monomer mixture consisting of: glycolic acid; optionally, at least one hydroxyacid (A) different from glycolic acid, wherein the molar amount of hydroxyacid (A) is of at most 5 % moles with respect to the sum of moles of glycolic acid and hydroxyacid (A); at least one polyol (H); and at least one alcohol (AO), preferably at least one diol (D).

Most preferably, the branched poly(hydroxyacid) polymer is obtained from the polycondensation reaction of a monomer mixture consisting of: glycolic acid; optionally, at least one hydroxyacid (A) different from glycolic acid, wherein the molar amount of hydroxyacid (A) is of at most 5 % moles with respect to the sum of moles of glycolic acid and hydroxyacid (A); at least one polyol (H); and at least one diol (D).

The hydroxyacid (A) is advantageously selected from the group consisting of lactic acid, 3-hydroxybutyric acid, 4-hydroxybutyric acid, 4-hydroxyvaleric acid, 5-hydroxyvaleric acid, 6-hydroxycaproic acid; preferably lactic acid.

Preferred polyols (H) are triols, in particular triols selected from the group consisting of glycerol, trimethylolpropane and trimethylolbutane, and tetraols, in particular pentaerythritol, as above detailed.

A polyol (H) which has been found to provide particularly good results is trimethylolpropane.

Polyol (H) is used in an amount such that the number of hydroxyl groups thereof is advantageously comprised between 0.050 and 1.200 % with respect to the overall number of carboxyl groups of glycolic acid and of hydroxyacid (A), if present. Advantageously, polyol (H) is present in an amount such that the number of hydroxyl groups thereof is at least 0.075%, even at least 0.100%, preferably at least 0.120% with respect to the overall number of carboxyl groups of glycolic acid and of hydroxyacid (A), if present. Polyol (H) is present in an amount such that the number of hydroxyl groups thereof is at most 1.000%, even at most 0.750%, preferably at most 0.600 % with respect to the overall number of carboxyl groups of glycolic acid and of hydroxyacid (A), if present.

When the alcohol (AO) is a monoalcohol (MO), it is preferably selected from the group consisting of dodecanol, benzyl alcohol, menthol and mixtures thereof.

When the alcohol (AO) is a diol (D), diol (D) is preferably selected from the group consisting of diethyleneglycol, 1,4-cyclohexane dimethanol, isosorbide, isoidide, dodecane 1,12-diol and mixtures thereof, more preferably diethyleneglycol, 1,4-cyclohexane dimethanol and mixtures thereof.

Diol (D) which has been shown to provide particularly good results is 1,4-cyclohexane dimethanol which is hence most particularly preferred, with a very particular preference to cis/trans isomer mixture of 1,4-cyclohexane dimethanol (CAS number 105-08-8).

Alcohol (AO) is preferably selected from diethyleneglycol, 1,4-cyclohexane dimethanol, isosorbide, isoidide, dodecane 1,12-diol, dodecanol, benzyl alcohol, menthol and mixtures thereof.

Alcohol (AO) is more preferably a diol (D), which is preferably characterized by a boiling point at atmospheric pressure of at least 100°C and/or which is preferably used in an amount as defined below.

Alcohol (AO) is used in an amount such that the number of hydroxyl groups thereof is advantageously comprised between 0.010 and 1.200 % with respect to the overall number of carboxylic groups of glycolic acid and of the hydroxyacid (A), if present.

Alcohol (AO) is used in an amount such that the number of hydroxyl groups thereof is advantageously of at least 0.010 %, preferably of at least 0.050 %, more preferably of at least 0.080 % and most preferably of at least 0.100 % and/or advantageously of at most 1.200%, even at most 1.000%, preferably of at most 0.750 %, more preferably of at most 0.700 %, most preferably of at most 0.650 %, with respect to the overall number of carboxylic groups of glycolic acid and of the hydroxyacid (A), if present.

Advantageously, alcohol (AO) in an amount such that the number of hydroxyl groups thereof is of from 0.010 to 0.650 % with respect to the overall number of carboxylic groups of glycolic acid and of hydroxyacid (A).

The polyol (H) and the alcohol (AO) are used in an amount such that the total number of moles of hydroxyl groups thereof divided by the total number of moles of carboxylic groups of glycolic acid and of hydroxyacid (A), if present, is comprised advantageously between 0.0 and 1.0 %, preferably between 0.1 and 1.0 % and more preferably between 0.3 and 0.9 %.

Acid (C) is a monocarboxylic acid. Among aliphatic monoacids, stearic acid, which is particularly preferred. When acid (C) is an aromatic monoacid, it is advantageously selected from the group consisting of benzoic acid, naphthoic acid and phenylacetic acid.

When present, acid (C) is preferably an aromatic monoacid.

When present, acid (C) is a monoacid and it is used in an amount such that the number of carboxylic acid groups thereof is advantageously comprised between 0.010 and 2.0 % with respect to the overall number of hydroxyl groups of glycolic acid and of hydroxyacid (A), if present. Acid (C) is used in an amount such that the number of carboxylic acid groups thereof is advantageously of at least 0.010 %, preferably of at least 0.030 %, more preferably of at least 0.075 %, with respect to the overall number of hydroxyl groups of glycolic acid and of hydroxyacid (A), if present; and/or advantageously of at most 2.0 %, preferably of at most 1.50 %, more preferably of at most 1.20 %, most preferably of at most 1.00 %, even most preferably of at most 0.75 %, with respect to the overall number of hydroxyl groups of glycolic acid and of hydroxyacid (A).

The branched poly(hydroxyacid) polymer according to this fifth embodiment may optionally comprise recurring units derived from at least one polyacid (O) as above defined. The polyacid (O) can comprise two carboxylic acid groups or more than two carboxylic acid groups, in particular three or four carboxylic acid groups.

Among suitable polyacids (O) mention may be made of phthalic acids, tricarballylic acid, butane-1,2,3,4 tetracarboxylic acid, 1,2,4,5- benzene tetracarboxylic acid (pyromellitic acid). The polyacid (O) is preferably an aromatic diacid, more preferably a phthalic acid and most preferably isophthalic acid.

When present, polyacid (O) is used in an amount such that the number of carboxylic acid groups thereof is comprised between 0.025 and 1.200 % with respect to the overall number of hydroxyl groups of glycolic acid and of the hydroxyacid (A), if present. When present, the polyacid (O) is used in amount such that the number of carboxylic acid groups thereof is of advantageously at least 0.025 %, preferably at least 0.050 % and more preferably at least 0.100 % and/or of advantageously at most 1.200 %, preferably at most 1.000 %, more preferably at most 0.900 %, most preferably at most 0.750 % and particularly most preferably at most 0.650 %, with respect to the overall number of hydroxyl groups of glycolic acid and of the hydroxyacid (A), if present. When present, an amount of polyacid (O) such that the number of carboxyl groups thereof is of from 0.150 to 0.550 % with respect to the overall number of hydroxyl groups of glycolic acid and of hydroxyacid (A), if present, has been found particularly useful.

The branched poly(hydroxyacid) polymer as above detailed, may be obtained by a method comprising polycondensing glycolic acid, optionally at least one hydroxyacid (A), at least one polyol (H), at least one alcohol (AO), optionally at least one acid (C) and optionally at least one polyacid (O). In said method, a polycondensation catalyst may optionally be added to the monomer mixture. Such polycondensation catalysts are well known to a person skilled in the art and may be selected, for example, from tin (II) chloride, stannous octoate, zinc acetate, zinc lactate, antimony trioxide, benzene sulfonic acid, p-toluenesulfonic acid, methanesulfonic acid, orthophosphoric acid and mixtures thereof. Methanesulfonic acid and mixtures of methanesulfonic acid with other catalysts, the ones disclosed above or others, are particularly preferred.

When added, such a catalyst is usually added in an amount of about 0.001 to 2 mol %, in particular of about 0.002 to 0.1 mol % with respect to the total moles of the monomers of the monomer mixtures.

Preferably, the step of polycondensing is carried out at least partly at a temperature such that the monomers' mixture and the formed growing polymer are in the molten phase. Generally, after a step of polycondensing in the molten state, providing for a pre-polymer possibly comprising unreacted glycolic acid, hydroxyacid (A) (when present), polyol (H), alcohol (AO), monoacid (C) (when present) and polyacid (O) (when present), polycondensation is then pursued at a temperature such that the pre-polymer is in the solid state (this step will be referred hereunder as solid state polymerization or SSP).

Hence, the method generally includes a first step of polymerization in the molten state to form a pre-polymer and a second step of solid state polymerization (SSP) for increasing molecular weight of the pre-polymer.

In the first step, the temperature is selected so as to maintain the monomer mixture and, with the progress of the reaction, the formed pre-polymer, in the molten state.

Generally, the first step of polycondensation in the molten state is accomplished under stirring, by maintaining the reaction mixture at temperatures ranging from 160 to 240°C.

The pre-polymer, possibly comprising residual monomers, as above detailed, obtained from first step of polymerization in the molten state undergoes a step of solidification and size reduction, so as to provide particulate pre-polymer material in the form of loose particles.

The particulate pre-polymer may be processed from the molten state under the form of pearls or pellets through standard techniques of pelletization and/or pastillation, or can be recovered as solidified crumbs and milled so as to provide powder.

When recovering pre-polymer, possibly comprising residual monomers, as above detailed, by solidification under the form of crumbs, a milling step is required. Such a milling step may be carried out by any means known to a person skilled in the art, for example by milling in a high-speed grinder or in a rotary mill.

The SSP step may take place by exposing the pre-polymer, possibly comprising residual monomers, as above detailed, in its solid state, either under vacuum or under an inert gas atmosphere (e.g. under nitrogen) or both, for one or more hours or even several days, at a temperature above the glass transition temperature of the said pre-polymer, possibly comprising residual monomers, as above detailed, but below its melting temperature. Typically, such a SSP step may be carried out at a temperature of 140 to 240°C, in particular of 150 to 230°C, for example at around 170-220°C and at a pressure below 5 kPa.

Depending on the nature of the residual monomer(s) in the pre-polymer, on their proportions and on the target final viscosity/molecular weight, on the temperature and on the pressure during the overall polycondensation step, the duration of the SSP step may be a few hours to 1 week, in particular from 6 to 200 h, for example of about 10 to 150 h.

Preferably, the polycondensation reaction in the molten phase takes place under vacuum in order to evaporate the water of reaction and prevent the latter from hydrolyzing the polymer chains being formed. Very particularly preferably, polycondensation reaction in the molten phase is initiated at atmospheric pressure and the vacuum is applied gradually until a pressure of the order of a few kPa, in particular less than 5 kPa, preferably less than 2 kPa, is achieved. The SSP step is typically carried out at a pressure of about 0.01 to 5 kPa, preferably of about 0.01 to 2 kPa.

### The chain extending agent, agent (CE)

Chain extending agent, agent (CE) used in the inventive composition comprises epoxy functional groups and has a number average functionality ≥ 2.

Suitable agents (CE) include oligomeric or polymeric compounds comprising two or more epoxy functional groups on average per molecule.

Notable non-limiting examples of suitable agents (CE) are for instance di- or polyglycidyl esters of di- or polycarboxylic acids or di- or polyglycidyl ethers of di- or polyols, poly(ethylene-co-glycidylmethacrylate) copolymers, poly(ethylene-co-methyl (meth)acrylate-co-glycidyl acrylate) copolymers, poly(ethylene-co-n-butyl acrylate-co-glycidyl acrylate) copolymers as well as copolymers of styrene and glycidyl (meth)acrylates.

Advantageously, agent (CE) useful for forming the inventive composition, as defined above, is a low molecular weight styrene-acrylate copolymer comprising epoxy functional groups.

**In** particular, agent (CE) is the polymerization product of (i) at least one epoxy-functional (meth)acrylic monomer; and (ii) at least one styrenic and/or (meth)acrylic monomer, wherein the polymerization product has a number average functionality of at least 2.

Agent (CE) may conveniently be selected among those polymerization products of (i) at least one epoxy-functional (meth)acrylic monomer; and (ii) at least one styrenic and/or (meth)acrylic monomer having an epoxy equivalent weight of from about 180 to about 2800, a number average epoxy functionality of at least 2 and less than about 30, a weight average epoxy functionality of up to about 140, and a number-average molecular weight (Mn) value of less than 6000. Agent (CE) may have a polydispersity index of from 1.5 to 5.0.

Preferably agent (CE) is a copolymer of styrene and glycidyl (meth)acrylate. Notable examples are for instance Joncryl^{®} ADR 4368 and Joncryl^{®} ADR 4468 sold by BASF.

Agent (CE) is present in the inventive composition in an amount of 0.01 to less than 1.00 wt%, with respect to the combined weight of polymer (HAP) and agent (CE).

Agent (CE) may advantageously be present in an amount of 0.05 to 0.95 wt%, preferably from 0.08 to 0.90 wt%, even in an amount of 0.10 to 0.85 wt%, more preferably from 0.10 to 0.80 wt%.

A good balance of properties was obtained with compositions comprising 0.10 to 0.75 wt % of agent (CE) with respect to the combined weight of polymer (HAP) and agent (CE).

### Chain extended polymer, polymer (CEHAP)

A further object of the invention is a chain extended polymer, [polymer (CEHAP)], comprising a backbone of a branched poly(hydroxyacid) polymer, polymer (HAP), covalently bonded to units deriving from chain extending agent, agent (CE). The amount of units deriving from agent (CE) is from 0.01 to less than 1.00 wt%, based on the total weight of polymer (CEHAP). The amount of units deriving from agent (CE) is from 0.05 to 0.95 wt%, preferably from 0.08 to 0.90 wt%, even from 0.10 to 0.85 wt%, more preferably from 0.10 to 0.80 wt%, and still from 0.10 to 0.75 wt % based on the total weight of polymer (CEHAP).

Advantageously, polymer (CEHAP) comprises a backbone of branched poly(hydroxyacid) polymer, polymer (HAP), covalently bonded to units deriving from at least one compound selected from the group consisting of di- or polyglycidyl esters of di- or polycarboxylic acids, di- or polyglycidyl ethers of di- or polyols, poly(ethylene-co-glycidylmethacrylate) copolymers, poly(ethylene-co-methyl (meth)acrylate-co-glycidyl acrylate) copolymers, poly(ethylene-co-n-butyl acrylate-co-glycidyl acrylate) copolymer, copolymers of styrene and glycidyl (meth)acrylates.

More advantageously, polymer (CEHAP) comprises a backbone of branched poly(hydroxyacid) polymer, polymer (HAP), covalently bonded to units deriving from at least one compound selected from the group consisting of the polymerization products of (i) at least one epoxy-functional (meth)acrylic monomer; and (ii) at least one styrenic and/or (meth)acrylic monomer, wherein the polymerization product has a number average functionality of at least 2.

**In** an advantageous embodiment of the invention, polymer (CEHAP) comprises a backbone of polymer (HAP) covalently bonded to units deriving from at least one compound selected from the group consisting of the polymerization products of (i) at least one epoxy-functional (meth)acrylic monomer; and (ii) at least one styrenic and/or (meth)acrylic monomer, wherein the polymerization product has a number average functionality of at least 2. The covalently bonded units are present in an amount of 0.01 to less than 1.00 wt%, from 0.05 to 0.95 wt%, from 0.08 to 0.90 wt%, from 0.10 to 0.85 wt%, from 0.10 to 0.80 wt%, and from 0.10 to 0.75 wt % based on the total weight of polymer (CEHAP).

Polymer (CEHAP) may be obtained by the reaction of polymer (HAP) and agent (CE). The reaction is preferably performed in the melt phase of polymer (HAP), i.e., in the absence of bulk solvent, according to any method known in the art.

**In** a first embodiment chain extended polymer (CEHAP) may be prepared from the inventive composition comprising polymer (HAP) and agent (CE). Advantageously, after mixing polymer (HAP) and agent (CE), the composition is supplied to an extruder or any other suitable device for performing a reaction in the melt phase of the polymer.

Alternatively polymer (HAP) and agent (CE) may be fed separately to the extruder, at different times.

After a length of extrusion sufficient to accomplish the reaction between the epoxy functional groups in agent (CE) and polymer (HAP), polymer (CEHAP) is obtained from the extruder, typically in the form of pellets.

Suitable extruders may be co-rotating, twin-screw extruders, that are known to provide high intensity distributive and dispersive mixing.

**In** a second embodiment agent (CE) could be reacted with polymer (HAP) during or at the end of the solid state polymerization step (SSP) as above detailed.

Hence in this embodiment the process for preparing polymer (CEHAP) comprises a first step of polycondensing (i) at least one hydroxyacid (A), (ii) optionally at least one acid (C), and (iii) at least one polyfunctional reactant (F), as detailed above, in the molten state to form a pre-polymer, and a second step of solid state polymerization (SSP) in the presence of agent (CE) in an amount of from 0.01 to less than 1.0 wt% with respect to the total weight of the monomers.

**In** a further embodiment, agent (CE) could be added to the monomer mixture during the first polycondensation step in the molten state.

In such an embodiment the process would thus comprise a first step of polycondensing (i) at least one hydroxyacid (A), (ii) optionally at least one acid (C), (iii) at least one polyfunctional reactant (F) and from 0.01 to less than 1.0 wt% of agent (CE) with respect to the total weight of the monomers, in the molten state to form a pre-polymer, and a second step of solid state polymerization (SSP).

The resulting polymer (CEHAP) can then be processed in a number of ways, including being extruded through die(s), injection molded or blow molded into the predetermined shape.

The inventive composition or the chain extended polymer (CEHAP) may additionally comprise fillers and other additives known in the art.

The nature of the filler is not particularly limited, and any filler of a fiber shape or a whisker shape may be used. A filler other than a fibrous or whisker-like filler may also be used, such as a sheet-like (stratified), powdered, or granular filler. In addition, fillers of various compositions may be used, such as carbon-based, metal-based, or silicon-based fillers.

The chain extended polymer (CEHAP) of the invention may be processed into articles using known melt processing techniques, such as injection molding, extrusion or any other forming or thermoforming techniques.

A further object of the invention are thus articles made of polymer (CEHAP). Notable non limiting examples of suitable articles are for instance a bottle, an article for hydrocarbon resource recovery, a film for packaging, a feminine hygiene product, a disposable pod, a structural component for electronic applications or a biomedical article.

Polymer (CEHAP) has a particularly advantageous degradation behaviour, which makes it particularly useful in the production of articles for hydrocarbon resource recovery which are suitably degraded into the ground, even at low temperatures. The article is preferably a downhole tool, a downhole tool member or an element of a downhole tool member.

By "downhole tool", it is meant according to the present invention, a tool used in a wellbore or borehole which is provided at the time of well drilling from above the ground (including above water) toward a production reservoir to aquire a hydrocarbon resource such as petroleum, .g. shale oil, and natural gas such as shale gas, and serving as a flow path of the hydrocarbon resource to recover the hydrocarbon resource after completion of the well. The downhole tool or the downhole tool member or the element of a downhole tool member advantageously refers to a piece of oilfield equipment that is used during drilling, completion or repair of downholes, including the tools used to perform plugging and fracturing of a borehole.

The downhole tool or downhole tool member or element of a downhole tool member is preferably selected from the group consisting of frac plugs or disintegratable plugs, bridge plugs, cement retainers, perforation gums, ball sealers, frac balls, diverting balls, ball seats, mandrels, slips, wedges, rings, seeling plugs, frac sleeves, fracture sleeve pistons (also known as a "piston" or "piston plugs") and packers.

The downhole tool or downhole tool member or element of a downhole tool member of the invention may be manufactured using known melt processing techniques, such as injection molding, cast molding, extrusion, or any other forming or thermoforming techniques. Additional manufacturing processes to modify the shape of the downhole tool after melt processing, such as cutting or boring, may be applied. Moreover, a downhole tool may comprise a combination of molded articles employing any number of the aforementioned melt processing techniques and subsequent manufacturing processes as required.

The invention will be now be described in more detail with reference to the following examples, whose purpose is merely illustrative and not intended to limit the scope of the invention.

### EXAMPLES

### Example 1

A 7.5 L stainless steel double jacketed reactor, equipped with heater, condenser, temperature and pressure sensors and mechanical stirrer was charged with 4500 g of a 70 wt % of an aqueous glycolic acid solution (41.420 mole, taken as 1.0000 mol basis), 10.004 g of trimethylolpropane (0.075 mole, 0.0018 mol per mol of glycolic acid), 3.584 g of cyclohexanedimethanol (0.025 mole, 0.0006 mol per mol of glycolic acid) and 0.536 g of methanesulfonic acid (0.006 mole, 0.00014 mol per mol of glycolic acid).

The reactor was then closed and purged three times using alternatively vacuum and nitrogen. The reaction solution was heated rapidely to 50°C under mechanical stirring. Pressure was reduced to 60 kPa and heating was pursued from 50°C up to 100°C over 30 min. The water distillation was started. The temperature was slowly raised to 130°C over 60 min to gently pursue the water distillation. When most of the water was removed, the temperature was increased faster to 220°C over 30 min.

Once 220°C was reached, the pressure was progressively decreased down to 3 kPa over 30 min. Temperature was then finally raised up to 230°C and kept steady for the rest of the synthesis. The vacuum was applied for 270 min more to increase the glycolic acid conversion.

The reaction mixture was then brought back to atmospheric pressure using nitrogen. The polymer was drawn from the kettle through the bottom valve and recovered in stainless steel (SS) trays over dry ice. The hard solidified polymer mass was taken out and weighed. Crude yield was: 2.10 kg (~88 %).

The polymer was grinded into small particles with less than 2 mm diameter using a high speed grinder, classified through a 2 mm sieve and further dried in a vacuum oven at 90°C overnight.

In order to obtain an homogeneous particle size distribution and consistency, the powder was pelletized on a 19 mm diameter BRABENDER extruder, equipped with a 25 L/D monoscrew having a compression ratio of 3:1. The die was a one strand die (2 mm hole) and the strand was "die faced cut" in dry conditions. Screw speed used was 60 rpm and the temperature profile was kept low (flat temperature profile of 195 °C, 4 heating zones in the extruder; 1 heating zone in the die), to cope with the low viscosity of the pre-polymer melt polymerized. Typical output was around 2.1 kg/h. Pellet size obtained was approximately 2 mm diameter and approximately 3 mm length.

The pellets so-obtained were introduced in a double wall rotary tumbler unit for uniform mixing and further polymerization in the solid state by applying heat and pulling vacuum. The tumbler used had a 15 L total volume / 6 L useful volume. About 2 kg of polymer was used per batch.

After closing the tumbler, rotation was started at 8 rpm. The vacum pump was started to reach 0.5 - 1 kPa vacuum in the tumbler. Simultaneously the tumbler was flushed with nitrogen (flow rate set at 50 L/h). Oil circulating in the double wall was heated in order to ramp up the temperature from room temperature to 214 °C in 16 h.

The tumbler was equipped with a sampling valve so that a specimen of reduced quantity of the polymer could be carefully taken out to analyze the melt viscosity using a parallel plate rheometer, at different times of solid state polymerization (SSP). After achieving the desired melt viscosity, the heating was stopped, the SSP was discontinued and the product was cooled down.

After 66 hours of SSP at 214°C, 1.8 kg of a branched poly(glycolic acid) polymer, polymer HAP-1, having a melt viscosity of 647 Pa x sec at a shear rate of 10 sec⁻¹ was obtained.

The residual methanesulfonic acid in the final polymer after SSP was titrated according to the described method and found to be 0.005 mol % in regard to glycolic acid units.

### Example 2

The polymer of Example 1 (HAP-1; 9.053 kg) and Joncryl^{®} ADR 4468 (CE-1; 0.01814 kg, 0.2 wt %) were added to a plastic container, sealed, and mixed via vigorous shaking for 3 min at room temperature to generate a pre-blend. The pre-blend was then dried at 80 °C in a desiccating oven (dew point -40 °C) for 15 h. The pre-blend was fed via a weight loss feeder blanketed with nitrogen into a 26 mm Coperion^{®} ZSK-26, a twin screw co-rotating, partially intermeshing extruder having 12 barrel sections and an overall L/d ratio of 48. Barrel sections 2 through 12 were heated to set point temperatures as follows: 2-9 240-250 °C, 10-12 220°C, die temperature 250 °C. The extruder screw speeds were operated at 200 rpm with a throughput of 11 kg/h and 3.3 kPa applied vacuum. The resulting strand was cooled with water and pelletized to yield 8.392 kg of CEHAP-1. Pellets of CEHAP-1 were dried in a vacuum oven at 70 °C for 1.5 h, then 90-110 °C until moisture levels were below 100 ppm as determined by coulometric Karl-Fischer titration. The dried pellets of CEHAP-1 were then molded into test specimen (ASTM D638 Type I tensile bars and ASTM D790 flex bars) using an injection molding machine operating with an injection temperature of 260 °C and a mold temperature of 130 °C. Samples were then annealed in an oven at 150 °C for 1 h under nitrogen atmosphere after heat treatment for 4 h at 80 °C under nitrogen atmosphere.

### Example 3

The procedure of Example 2 was followed but with pre-blends prepared from 9.026 kg of polymer HAP-1 and 0.04536 kg (0.5 wt. %) of CE-1. Polymer CEHAP-2 was obtained.

### Comparative Example 1

The procedure of Example 2 was followed, but with pre-blends prepared with HAP-1 only.

### Comparative Example 2

The procedure of Example 2 but with pre-blends prepared from 8.9811 kg HAP-1 and 0.0907 kg (1.0 wt. %) of CE-1. This composition caused fluctuations in extruder pressure resulting in irregular flow through the die and unmelts. Thus adequate pellets could not be formed and specimen were not molded for testing.

### Measurement of mechanical properties

Tensile properties were measured and reported in accordance with the procedure laid out in ASTM D638 and flexural properties were measured in accordance with the procedure laid out in ASTM D790. Tensile tests were run with a testing speed of 50.8 mm/min. Data are reported as a mean ± standard deviation of 5-6 specimen. The properties are summarised in Table 1.

**Table 1**

| | **Example 2** | **Example 3** | **Comparative Example 1** |
|---|---|---|---|
| Flexural modulus (GPa) | 9.45 ± 0.22 | 10.14 ± 0.09 | 8.89 ± 0.77 |
| Tensile modulus (GPa) | 8.89 ± 0.03 | 9.52 ± 0.04 | 8.21 ± 0.02 |
| Tensile elongation at break (%) | 10 ± 0 | 16 ± 1 | 4.9 ± 2.5 |

Polymers CEHAP-1 and CEHAP-2, having 0.2 and 0.5 wt% of units deriving from CE-1 respectively, exhibit an increase in ductility (measured in terms of elongation at break) while keeping the high modulus of the branched polymer HAP-1.

The polymer of Comparative Example 2, containing 1.0 wt% of units deriving from agent CE-1, could not be molded into finished parts suitable for testing.

### Example 4

### Evaluation of degradation behaviour

An injection molded ASTM D790 flex bar PGA was cut to 5 g. A 500 mL erlenmeyer flask was charged with the 5 g flex bar PGA sample, a magnetic stir bar, and DI water (250 mL). The flask was set to stir at 60 rpm and the water was heated to 65°C. During the experiment, temperature and water level were monitored and adjusted as needed to maintain constant conditions. After 7 days of stirring at 65°C the water mixture was filtered through a Buchner funnel (2 mm pore size) and the remaining PGA part was dried in a vacuum oven at 30°C to a constant mass. The mass remaining is reported as a percentage of the original mass of the flex bar. The experiment was performed in triplicate and the average residual mass is reported in Table 2.

**Table 2**

| | **Example 2** | **Example 3** | **Comparative Example 1** |
|---|---|---|---|
| Degradation test (65°C, remaining mass after 7 days) (%) | 45.8 | 25.1 | 36.5 |

Polymers CEHAP-1 and CEHAP-2, having 0.2 and 0.5 wt% of units deriving from CE-1 respectively, exhibit high degradability while showing increased ductility and high modulus making them particularly useful in the production of articles for hydrocarbon resource recovery which are suitably degraded into the ground, such as downhole tools.

## Claims

1. A composition comprising: a branched poly(hydroxyacid) polymer [polymer (HAP)] obtained from the polycondensation reaction of a monomer mixture comprising:
(i) at least one hydroxyacid having only one hydroxyl group and only one carboxylic acid group [hydroxyacid (A)];
(ii) optionally at least one carboxylic acid having one or two carboxylic acid groups and being free from hydroxyl group [acid (C)], and
(iii) at least one polyfunctional reactant different from hydroxyacid (A) and acid (C), [reactant (F)], selected from the group consisting of :
- compounds containing at least one epoxy functional group, preferably compounds selected from the group consisting of epoxysilanes and polyepoxides; and
- mixtures comprising at least one polyol comprising at least three hydroxyl groups and being free from carboxylic acid group [polyol (H)] and at least one polyacid comprising at least two carboxylic acid groups and being free from hydroxyl groups [polyacid (O)]; and
- mixtures comprising at least one polyol comprising at least three hydroxyl groups and being free from carboxylic acid group [polyol (H)] and at least one alcohol comprising one or two hydroxyl groups and being free from carboxylic acid group [alcohol (AO)]
and a chain extending agent comprising epoxy functional groups and having a number average functionality ≥ 2, [agent (CE)], in an amount of from 0.01 to less than 1.00 wt% with respect to the combined weight of polymer (HAP) and agent (CE).

2. The composition according to claim 1 wherein polymer (HAP) is obtained from the polycondensation reaction of a monomer mixture comprising at least one hydroxyacid (A) which is glycolic acid and a reactant (F) which is a mixture comprising at least one polyol (H) comprising at least three hydroxyl groups and at least one polyacid (O) comprising at least three carboxylic acid groups.

3. The composition according to claim 1 or 2 wherein polymer (HAP) is obtained from the polycondensation reaction of a monomer mixture comprising at least one hydroxyacid (A) which is glycolic acid; optionally at least one acid (C); and at least one reactant (F) selected from mixtures comprising at least one polyol (H) comprising at least three hydroxyl groups, at least one polyacid (O) comprising at least three carboxylic acid groups, and wherein the amount of acid (C), when present, is such that the number of carboxylic acid groups thereof is comprised between 0.0001 to 0.010 % with respect to the number of hydroxyl groups of hydroxyacid (A).

4. The composition according to claim 1 wherein t polymer (HAP) is obtained from the polycondensation reaction of a monomer mixture comprising glycolic acid; optionally, at least one hydroxy acid (A) different from glycolic acid, in an amount of at most 5 % moles, with respect to the sum of moles of glycolic acid and hydroxy acid (A); optionally at least one carboxylic acid (C) having one carboxylic acid group ; and at least one reactant (F) selected from mixtures comprising at least one polyol (H) comprising at least three hydroxyl groups and at least one polyacid (O) selected from the aromatic acids comprising two aromatic carboxylic acid groups and wherein: the amount of polyol (H) is such that the number of hydroxyl groups thereof is comprised between 0.050 to 1.200 % with respect to the overall number of carboxyl groups of glycolic acid and the hydroxyacid (A), if present; the amount of polyacid (O) is such that the number of carboxylic acid groups thereof is comprised between 0.050 to 0.750 % with respect to the overall number of hydroxyl groups of glycolic acid and of the hydroxy acid (A), if present; and the amount of acid (C), when present, is such that the number of carboxylic acid groups thereof is comprised between 0.0001 to 0.010 % with respect to the overall number of hydroxyl groups of glycolic acid and of the hydroxy acid (A), if present.

5. The composition according to claim 1 wherein polymer (HAP) is obtained from the polycondensation reaction of glycolic acid; optionally, at least one hydroxyacid (A) different from glycolic acid, wherein the molar amount of hydroxyacid (A) is of at most 5 % moles with respect to the sum of moles of glycolic acid and hydroxyacid (A); optionally at least one carboxylic acid (C); optionally at least one polyacid (O); and at least one reactant (F) selected from mixtures comprising at least one polyol (H) and at least one alcohol (AO) wherein the amount of polyacid (O) is such that the number of carboxylic acid groups thereof is comprised between 0.025 and 1.200 % with respect to the overall number of hydroxyl groups of glycolid acid and of the hydroxyacid (A), if present.

6. The composition of anyone of the preceding claims wherein agent (CE) is selected from the group consisting of di- or polyglycidyl esters of di- or polycarboxylic acids, di- or polyglycidyl ethers of di- or polyols, poly(ethylene-co-glycidylmethacrylate) copolymers, poly(ethylene-co-methyl (meth)acrylate-co-glycidyl acrylate) copolymers, poly(ethylene-co-n-butyl acrylate-co-glycidyl acrylate) copolymers,copolymers of styrene and glycidyl (meth)acrylates.

7. The composition of anyone of the preceding claims wherein agent (CE) is selected from the group consisting of the polymerization products of (i) at least one epoxy-functional (meth)acrylic monomer; and (ii) at least one styrenic and/or (meth)acrylic monomer.

8. The composition of anyone of the preceding claims comprising from 0.05 to 0.95 wt % of agent (CE) with respect to the combined weight of polymer (HAP) and agent (CE).

9. A chain extended polymer, [polymer (CEHAP)], comprising a backbone comprising polymer (HAP) covalently bonded to units deriving from agent (CE), as defined in anyone of claims 1 to 8, wherein the amount of units deriving from agent (CE) is from 0.01 to less than 1.00 wt% based on the weight of polymer (CEHAP).

10. A process for the preparation of polymer (CEHAP) comprising reacting in the melt polymer (HAP) and from 0.01 to less than 1.00 wt% of agent (CE) with respect to the combined weight of polymer (HAP) and agent (CE).

11. The process of claim 10 which is performed in an extruder and comprises either feeding the composition of anyone of claims 1 to 8 to said extruder or feeding polymer (HAP) and agent (CE) separately to said extruder.

12. A process for the preparation of polymer (CEHAP) comprising a first step of polycondensing (i) at least one hydroxyacid (A), (ii) optionally at least one acid (C), and (iii) at least one polyfunctional reactant (F), as defined in claim 1, in the molten state to form a pre-polymer, and a second step of solid state polymerization (SSP) wherein agent (CE) is added in an amount of from 0.01 to less than 1.0 wt% with respect to the combined weight of polymer (HAP) and agent (CE) either during the first polycondensing step or during the second solid state polymerization step.

13. An article comprising the composition of anyone of claims 1 to 8 or polymer (CEHAP) of claim 9.

14. The article of claim 13 which is a bottle, an article for hydrocarbon resource recovery, preferably a downhole tool or a a downhole tool member, a film for packaging, a feminine hygiene product, a disposable pod, a structural component for electronic applications or a biomedical article.

15. A process for the manufacture of an article of anyone of claims 13 to 14, said method comprising melt processing and injection molding or extruding a composition of anyone of claims 1 to 8 or polymer (CEHAP) as defined in claim 9.

## Patentansprüche

1. Zusammensetzung umfassend: ein verzweigtes Poly(hydroxysäure)-Polymer [Polymer (HAP)], erhalten durch die Polykondensationsreaktion eines Monomergemischs umfassend:
(i) wenigstens eine Hydroxysäure, die nur eine Hydroxygruppe und nur eine Carbonsäuregruppe aufweist [Hydroxysäure (A)];
(ii) gegebenenfalls wenigstens eine Carbonsäure, die eine oder zwei Carbonsäuregruppen aufweist und frei von Hydroxygruppen ist [Säure (C)] und
(iii) wenigstens einen polyfunktionellen Reaktanten, der von Hydroxysäure (A) und Säure (C) verschieden ist [Reaktant (F)], ausgewählt aus der Gruppe bestehend aus:
- Verbindungen, die wenigstens eine epoxyfunktionelle Gruppe enthalten, vorzugsweise Verbindungen ausgewählt aus der Gruppe bestehend aus Epoxysilanen und Polyepoxiden; und
- Gemischen umfassend wenigstens ein Polyol, das wenigstens drei Hydroxygruppen umfasst und frei von Carbonsäuregruppen ist [Polyol (H)], und wenigstens eine Polysäure, die wenigstens zwei Carbonsäuregruppen umfasst und frei von Hydroxygruppen ist [Polysäure (O)]; und
- Gemischen umfassend wenigstens ein Polyol, das wenigstens drei Hydroxygruppen umfasst und frei von Carbonsäuregruppen ist [Polyol (H)], und wenigstens einen Alkohol, der eine oder zwei Hydroxygruppen umfasst und frei von Carbonsäuregruppen ist [Alkohol (AO)]
und ein Kettenverlängerungsmittel, das epoxyfunktionelle Gruppen umfasst und eine anzahlgemittelte Funktionalität ≥ 2 aufweist [Mittel (CE)], in einer Menge von 0,01 bis weniger als 1,00 Gew.-% bezogen auf das kombinierte Gewicht von Polymer (HAP) und Mittel (CE).

2. Zusammensetzung nach Anspruch 1, wobei Polymer (HAP) erhalten wird durch die Polykondensationsreaktion eines Monomergemischs umfassend wenigstens eine Hydroxysäure (A), die Glycolsäure ist, und einen Reaktanten (F), der ein Gemisch ist, das wenigstens ein Polyol (H), das wenigstens drei Hydroxygruppen umfasst, und wenigstens eine Polysäure (O), die wenigstens drei Carbonsäuregruppen umfasst, umfasst.

3. Zusammensetzung nach Anspruch 1 oder 2, wobei Polymer (HAP) erhalten wird durch die Polykondensationsreaktion eines Monomergemischs umfassend wenigstens eine Hydroxysäure (A), die Glycolsäure ist; gegebenenfalls wenigstens eine Säure (C); und wenigstens einen Reaktanten (F) ausgewählt aus Gemischen umfassend wenigstens ein Polyol (H), das wenigstens drei Hydroxygruppen umfasst, wenigstens eine Polysäure (O), die wenigstens drei Carbonsäuregruppen umfasst, und wobei die Menge an Säure (C), wenn vorhanden, so ist, dass die Anzahl von Carbonsäuregruppen davon in dem Bereich zwischen 0,0001 und 0,010 % bezogen auf die Anzahl von Hydroxygruppen der Hydroxysäure (A) liegt.

4. Zusammensetzung nach Anspruch 1, wobei das Polymer (HAP) erhalten wird durch die Polykondensationsreaktion eines Monomergemischs umfassend Glycolsäure; gegebenenfalls wenigstens eine Hydroxysäure (A), die von Glycolsäure verschieden ist, in einer Menge von höchstens 5 Mol-% bezogen auf die Summe der Mol an Glycolsäure und Hydroxysäure (A); gegebenenfalls wenigstens eine Carbonsäure (C), die eine Carbonsäuregruppe aufweist; und wenigstens einen Reaktanten (F) ausgewählt aus Gemischen umfassend wenigstens ein Polyol (H), das wenigstens drei Hydroxygruppen umfasst, und wenigstens eine Polysäure (O) ausgewählt aus den aromatischen Säuren, die zwei aromatische Carbonsäuregruppen umfassen, und wobei: die Menge an Polyol (H) so ist, dass die Anzahl an Hydroxygruppen davon in dem Bereich zwischen 0,050 und 1,200 % bezogen auf die Gesamtzahl von Carboxylgruppen der Glycolsäure und der Hydroxysäure (A), falls vorhanden, liegt; die Menge an Polysäure (O) so ist, dass die Anzahl von Carbonsäuregruppen davon in dem Bereich zwischen 0,050 und 0,750 % bezogen auf die Gesamtzahl von Hydroxygruppen der Glycolsäure und der Hydroxysäure (A), falls vorhanden, liegt; und die Menge an Säure (C), falls vorhanden, so ist, dass die Anzahl von Carbonsäuregruppen davon in dem Bereich zwischen 0,0001 und 0,010 % bezogen auf die Gesamtzahl von Hydroxygruppen der Glycolsäure und der Hydroxysäure (A), falls vorhanden, liegt.

5. Zusammensetzung nach Anspruch 1, wobei Polymer (HAP) erhalten wird durch die Polykondensationsreaktion von Glycolsäure; gegebenenfalls wenigstens einer Hydroxysäure (A), die von Glycolsäure verschieden ist, wobei die molare Menge an Hydroxysäure (A) höchstens 5 Mol-% bezogen auf die Summe der Mol an Glycolsäure und Hydroxysäure (A) beträgt; gegebenenfalls wenigstens einer Carbonsäure (C); gegebenenfalls wenigstens einer Polysäure (O); und wenigstens einem Reaktante (F) ausgewählt aus Gemischen, die wenigstens ein Polyol (H) und wenigstens einen Alkohol (AO) umfassen, wobei die Menge an Polysäure (O) so ist, dass die Anzahl von Carbonsäuregruppen davon in dem Bereich zwischen 0,025 und 1,200 % bezogen auf die Gesamtzahl von Hydroxygruppen der Glycolidsäure und der Hydroxysäure (A), falls vorhanden, liegt.

6. Zusammensetzung nach einem der vorstehenden Ansprüche, wobei das Mittel (CE) ausgewählt ist aus der Gruppe bestehend aus Di- oder Polyglycidylestern von Di- oder Polycarbonsäuren, Di- oder Polyglycidylethern von Di- oder Polyolen, Poly(ethylen-co-glycidylmethacrylat)-Copolymeren, Poly(ethylen-co-methyl(meth)acrylat-co-glycidylacrylat)-Copolymeren, Poly(ethylen-co-n-butylacrylat-co-glycidylacrylat)-Copolymeren, Copolymeren von Styrol und Glycidyl(meth)acrylaten.

7. Zusammensetzung nach einem der vorstehenden Ansprüche, wobei das Mittel (CE) ausgewählt ist aus der Gruppe bestehend aus den Polymerisationsprodukten von (i) wenigstens einem epoxyfunktionellen (Meth)acrylmonomer; und (ii) wenigstens einem Styrol- und/oder (Meth)acrylmonomer.

8. Zusammensetzung nach einem der vorstehenden Ansprüche, umfassend 0,05 bis 0,95 Gew.-% an Mittel (CE) bezogen auf das kombinierte Gewicht von Polymer (HAP) und Mittel (CE).

9. Kettenverlängertes Polymer [Polymer (CEHAP)] umfassend ein Gerüst, das ein Polymer (HAP) umfasst, das kovalent an Einheiten gebunden ist, die von dem Mittel (CE) nach einem der Ansprüche 1 bis 8 abgeleitet sind, wobei die Menge an Einheiten, die von dem Mittel (CE) abgeleitet sind, 0,01 bis weniger als 1,00 Gew.-% bezogen auf das Gewicht des Polymers (CEHAP) beträgt.

10. Verfahren zur Herstellung von Polymer (CEHAP), umfassend Umsetzen von Polymer (HAP) und von 0,01 bis weniger als 1,00 Gew.-% Mittel (CE), bezogen auf das kombinierte Gewicht von Polymer (HAP) und Mittel (CE), in der Schmelze.

11. Verfahren nach Anspruch 10, das in einem Extruder durchgeführt wird und entweder Zuführen der Zusammensetzung nach einem der Ansprüche 1 bis 8 zu dem Extruder oder Zuführen von Polymer (HAP) und Mittel (CE) getrennt zu dem Extruder umfasst.

12. Verfahren zur Herstellung von Polymer (CEHAP), umfassend einen ersten Schritt der Polykondensation von (i) wenigstens einer Hydroxysäure (A), (ii) gegebenenfalls wenigstens einer Säure (C) und (iii) wenigstens einem polyfunktionellen Reaktanten (F), wie in Anspruch 1 definiert, in dem geschmolzenen Zustand, um ein Präpolymer zu bilden, und einen zweiten Schritt der Festkörperpolymerisation (SSP), wobei Mittel (CE) in einer Menge von 0,01 bis weniger als 1,0 Gew.-%, bezogen auf das kombinierte Gewicht von Polymer (HAP) und Mittel (CE), entweder während des ersten Polykondensationsschritts oder während des zweiten Festkörperpolymerisationsschritts zugegeben wird.

13. Gegenstand umfassend die Zusammensetzung nach einem der Ansprüche 1 bis 8 oder das Polymer (CEHAP) nach Anspruch 9.

14. Gegenstand nach Anspruch 13, der eine Flasche, ein Gegenstand zur Gewinnung von Kohlenwasserstoffressourcen, vorzugsweise ein Bohrlochwerkzeug oder ein Bohrlochwerkzeugelement, eine Verpackungsfolie, ein Damenhygieneprodukt, eine Einwegkapsel, eine Strukturkomponente für Elektronikanwendungen oder ein biomedizinischer Gegenstand ist.

15. Verfahren zur Herstellung eines Gegenstands nach einem der Ansprüche 13 bis 14, wobei das Verfahren Schmelzverarbeiten und Spritzgießen oder Extrudieren einer Zusammensetzung nach einem der Ansprüche 1 bis 8 oder eines Polymers (CEHAP) nach Anspruch 9 umfasst.

## Revendications

1. Composition comprenant : un polymère de poly(hydroxyacide) ramifié [polymère (HAP)] obtenu à partir de la réaction de polycondensation d'un mélange de monomères comprenant :
(i) au moins un hydroxyacide ayant un seul groupe hydroxyle et un seul groupe acide carboxylique [hydroxyacide (A)] ;
(ii) éventuellement au moins un acide carboxylique ayant un ou deux groupes acide carboxylique et qui est exempt de groupe hydroxyle [acide (C)], et
(iii) au moins un réactif polyfonctionnel différent de l'hydroxyacide (A) et de l'acide (C), [réactif (F)], choisi dans le groupe constitué par :
- des composés contenant au moins un groupe fonctionnel époxy, de préférence des composés choisis dans le groupe constitué par les époxysilanes et les polyépoxydes ; et
- des mélanges comprenant au moins un polyol comprenant au moins trois groupes hydroxyle et qui est exempt de groupe acide carboxylique [polyol (H)] et au moins un polyacide comprenant au moins deux groupes acide carboxylique et qui est exempt de groupe hydroxyle [polyacide (O)] ; et
- des mélanges comprenant au moins un polyol comprenant au moins trois groupes hydroxyle et qui est exempt de groupe acide carboxylique [polyol (H)] et au moins un alcool comprenant un ou deux groupes hydroxyle et qui est exempt de groupe acide carboxylique [alcool (AO)]
et un agent d'extension de chaîne comprenant des groupes fonctionnels époxy et ayant une fonctionnalité moyenne en nombre ≥ 2, [agent (CE)], en une quantité de 0,01 à moins de 1,00 % en poids par rapport au poids combiné du polymère (HAP) et de l'agent (CE).

2. Composition selon la revendication 1, dans laquelle le polymère (HAP) est obtenu à partir de la réaction de polycondensation d'un mélange de monomères comprenant au moins un hydroxyacide (A) qui est l'acide glycolique et un réactif (F) qui est un mélange comprenant au moins un polyol (H) comprenant au moins trois groupes hydroxyle et au moins un polyacide (O) comprenant au moins trois groupes acide carboxylique.

3. Composition selon la revendication 1 ou 2, dans laquelle le polymère (HAP) est obtenu à partir de la réaction de polycondensation d'un mélange de monomères comprenant au moins un hydroxyacide (A) qui est l'acide glycolique ; éventuellement au moins un acide (C) ; et au moins un réactif (F) choisi parmi des mélanges comprenant au moins un polyol (H) comprenant au moins trois groupes hydroxyle, au moins un polyacide (O) comprenant au moins trois groupes acide carboxylique, et dans laquelle la quantité d'acide (C), lorsqu'elle est présente, est telle que le nombre de groupes acide carboxylique de celui-ci est compris entre 0,0001 et 0,010 % par rapport au nombre de groupes hydroxyle de l'hydroxyacide (A).

4. Composition selon la revendication 1, dans laquelle le polymère (HAP) est obtenu à partir de la réaction de polycondensation d'un mélange de monomères comprenant de l'acide glycolique ; éventuellement, au moins un hydroxyacide (A) différent de l'acide glycolique, en une quantité d'au plus 5 % en moles, par rapport à la somme des moles d'acide glycolique et d'hydroxyacide (A) ; éventuellement, au moins un acide carboxylique (C) ayant un groupe acide carboxylique ; et au moins un réactif (F) choisi parmi les mélanges comprenant au moins un polyol (H) comprenant au moins trois groupes hydroxyle et au moins un polyacide (O) choisi parmi les acides aromatiques comprenant deux groupes acide carboxylique aromatique et dans lequel : la quantité de polyol (H) est telle que le nombre de groupes hydroxyle de celui-ci est compris entre 0,050 et 1,200 % par rapport au nombre total de groupes carboxyle de l'acide glycolique et de l'hydroxyacide (A), s'il est présent ; la quantité de polyacide (O) est telle que le nombre de groupes acide carboxylique de celui-ci est compris entre 0,050 et 0,750 % par rapport au nombre total de groupes hydroxyle de l'acide glycolique et de l'hydroxyacide (A), s'il est présent ; et la quantité d'acide (C), lorsqu'il est présent, est telle que le nombre de groupes acide carboxylique de celui-ci est compris entre 0,0001 et 0,010 % par rapport au nombre total de groupes hydroxyle de l'acide glycolique et de l'acide hydroxy (A), s'il est présent.

5. Composition selon la revendication 1, dans laquelle le polymère (HAP) est obtenu à partir de la réaction de polycondensation de l'acide glycolique ; éventuellement, au moins un hydroxyacide (A) différent de l'acide glycolique, dans laquelle la quantité molaire de l'hydroxyacide (A) est d'au plus 5 % en moles par rapport à la somme des moles de l'acide glycolique et de l'hydroxyacide (A) ; éventuellement au moins un acide carboxylique (C) ; éventuellement au moins un polyacide (O) ; et au moins un réactif (F) choisi parmi des mélanges comprenant au moins un polyol (H) et au moins un alcool (AO), dans lequel la quantité de polyacide (O) est telle que le nombre de groupes acide carboxylique de celui-ci est compris entre 0,025 et 1,200 % par rapport au nombre total de groupes hydroxyle de l'acide glycolidique et de l'hydroxyacide (A), s'il est présent.

6. Composition selon l'une quelconque des revendications précédentes, dans laquelle l'agent (CE) est choisi dans le groupe constitué par les esters di- ou polyglycidyliques d'acides di- ou polycarboxyliques, les éthers di- ou polyglycidyliques de di- ou polyols, les copolymères poly(éthylène-co-méthacrylate de glycidyle), les copolymères poly(éthylène-co-méthacrylate de méthyle-co-acrylate de glycidyle), les copolymères poly(éthylène-co-n-butylacrylate-co-acrylate de glycidyle), les copolymères de styrène et de (méth)acrylates de glycidyle.

7. Composition selon l'une quelconque des revendications précédentes, dans laquelle l'agent (CE) est choisi dans le groupe constitué par les produits de polymérisation (i) d'au moins un monomère (méth)acrylique à fonctionnalité époxy ; et (ii) d'au moins un monomère styrénique et/ou (méth)acrylique.

8. Composition selon l'une quelconque des revendications précédentes, comprenant de 0,05 à 0,95 % en poids d'agent (CE) par rapport au poids combiné du polymère (HAP) et de l'agent (CE).

9. Polymère à chaîne étendue, [polymère (CEHAP)], comprenant un squelette comprenant un polymère (HAP) lié de manière covalente à des unités dérivant de l'agent (CE), tel que défini dans l'une quelconque des revendications 1 à 8, dans lequel la quantité d'unités dérivant de l'agent (CE) est de 0,01 à moins de 1,00 % en poids sur la base du poids du polymère (CEHAP).

10. Procédé de préparation d'un polymère (CEHAP) comprenant la mise en réaction dans le polymère fondu (HAP) et de 0,01 à moins de 1,00 % en poids d'agent (CE) par rapport au poids combiné du polymère (HAP) et de l'agent (CE).

11. Procédé selon la revendication 10, qui est mis en œuvre dans une extrudeuse et comprend soit l'introduction de la composition selon l'une quelconque des revendications 1 à 8 dans ladite extrudeuse, soit l'introduction du polymère (HAP) et de l'agent (CE) séparément dans ladite extrudeuse.

12. Procédé de préparation d'un polymère (CEHAP) comprenant une première étape de polycondensation (i) d'au moins un hydroxyacide (A), (ii) éventuellement d'au moins un acide (C), et (iii) d'au moins un réactif polyfonctionnel (F), tel que défini dans la revendication 1, à l'état fondu pour former un prépolymère, et une seconde étape de polymérisation à l'état solide (SSP) dans laquelle l'agent (CE) est ajouté en une quantité comprise entre 0,01 et moins de 1,0 % en poids par rapport au poids combiné du polymère (HAP) et de l'agent (CE) soit pendant la première étape de polycondensation, soit pendant la seconde étape de polymérisation à l'état solide.

13. Article comprenant la composition selon l'une quelconque des revendications 1 à 8 ou le polymère (CEHAP) selon la revendication 9.

14. Article selon la revendication 13, qui est une bouteille, un article pour la récupération de ressources en hydrocarbures, de préférence un outil de fond de trou ou un élément d'outil de fond de trou, un film pour emballage, un produit d'hygiène féminine, une capsule jetable, un composant structural pour applications électroniques ou un article biomédical.

15. Procédé pour la fabrication d'un article selon l'une quelconque des revendications 13 à 14, ledit procédé comprenant le traitement à l'état fondu et le moulage par injection ou l'extrusion d'une composition selon l'une quelconque des revendications 1 à 8 ou d'un polymère (CEHAP) tel que défini dans la revendication 9.
